# EUROPÄISCHE PATENTSCHRIFT

(11) **EP 2 171 983 B1**
(45) Veröffentlichungstag und Bekanntmachung des Hinweises auf die Patenterteilung: **29.02.2012**
(21) Anmeldenummer: 07785847.0
(22) Anmeldetag: 25.06.2007
(51) Int. Cl.: H04L 29/08, H04L 12/56, G06F 17/30

(54) **VERFAHREN ZUM WEITERLEITEN VON DATEN IN EINEM DEZENTRALEN DATENNETZ**
METHOD FOR FORWARDING DATA IN A LOCAL DATA NETWORK
PROCÉDÉ DE TRANSFERT DE DONNÉES DANS UN RÉSEAU DE DONNÉES DÉCENTRALISÉ

(43) Veröffentlichungstag der Anmeldung: 07.04.2010
(73) Patentinhaber: Siemens Aktiengesellschaft, 80333 München (DE)
(72) Erfinder: GERDES, Christoph, 81667 München (DE); KERN, Claus, 90518 Altdorf (DE); KLEEGREWE, Christian, 85386 Eching (DE); SOUTHALL, Alan, 69190 Waldorf (DE); STÄBER, Fabian, 80639 München (DE); RUSITSCHKA, Sebnem, 81543 München (DE)
(86) Internationale Anmeldenummer: PCT/EP2007/005611
(87) Internationale Veröffentlichungsnummer: WO 2009/000294

(56) Entgegenhaltungen:
- P. FELBER, K.W. ROSS, E.W. BIERSACK, L. GARCES-ERICE, AND G. URVOY-KELLER: "Structured Peer-to-Peer Networks: Faster, Closer, Smarter" IEEE DATA ENGINEERING BULLETIN, [Online] 2005, Seiten 1-8, XP002493614 Gefunden im Internet: URL:http://citeseerx.ist.psu.edu/viewdoc/d ownload?doi=10.1.1.60.2657&rep=rep1&type=p df> [gefunden am 2008-08-27]
- GLEB SKOBELTSYN ET AL: "Efficient Processing of XPath Queries with Structured Overlay Networks" ON THE MOVE TO MEANINGFUL INTERNET SYSTEMS 2005: COOPIS, DOA, AND ODBA SE LECTURE NOTES IN COMPUTER SCIENCE;;LNCS, SPRINGER, BERLIN, DE, Bd. 3761, 1. Januar 2005 (2005-01-01), Seiten 1243-1260, XP019022977 ISBN: 978-3-540-29738-3
- LI YIN ET AL: "eDSR: A Decentralized Service Registry for e-Commerce" E-BUSINESS ENGINEERING, 2005. ICEBE 2005. IEEE INTERNATIONAL CONFERENC E ON BEIJING, CHINA 12-18 OCT. 2005, PISCATAWAY, NJ, USA,IEEE, 12. Oktober 2005 (2005-10-12), Seiten 615-619, XP010860521 ISBN: 978-0-7695-2430-6
- A. BONIFATI, U. MATRANGOLO, A. CUZZOCREA, M. JAIN: "XPath Lookup Queries in P2P Networks"[Online] 12. November 2004 (2004-11-12), Seiten 1-8, XP002493615 ACM WIDM 2004, Washington DC (USA) Gefunden im Internet: URL:http://dns2.icar.cnr.it/angela/pubs/xp 2p.pdf> [gefunden am 2008-08-26]
- BONIFATI ET AL: "Storing and retrieving XPath fragments in structured P2P networks" DATA & KNOWLEDGE ENGINEERING, NORTH-HOLLAND, Bd. 59, Nr. 2, 1. November 2006 (2006-11-01), Seiten 247-269, XP005635754 ISSN: 0169-023X
- OLIVER BECKER: "XML Path Language (XPath) Version 1.0, Deutsche, kommentierte Übersetzung"[Online] 26. Februar 2002 (2002-02-26), Seiten 1-54, XP002493616 Gefunden im Internet: URL:http://www.obqo.de/w3c-trans/xpath-de> [gefunden am 2008-08-26]

## Beschreibung

Die Erfindung betrifft ein Verfahren zum Weiterleiten von Daten in einem dezentralen Datennetz sowie auf ein dezentrales Datennetz.

Die Erfindung bezieht sich auf dezentrale Datennetze, bei denen eine Vielzahl von Netzknoten eine erste Schicht bildet und eine Baumstruktur in der Form einer Mehrzahl von Baumknoten als eine zweite Schicht auf die Vielzahl von Netzknoten der ersten Schicht verteilt ist. Ein jeweiliger Baumknoten wird dabei durch einen eindeutigen Pfad in der Baumstruktur charakterisiert, und jedem Pfad ist eindeutig eine von wenigstens einem Netzknoten verwaltete Ressource in dem dezentralen Datennetz zugewiesen. Unter Ressourcen sind hierbei insbesondere Daten zu verstehen, welche in Netzknoten des Datennetzes gespeichert sind.

Durch die Abbildung einer Baumstruktur auf dezentrale Datennetze könne Steuer- und Diagnosedaten von technischen Systemen in geeigneter Weise durch das Netz geleitet werden. Aus dem Stand der Technik ist es hierbei bekannt, dass sog. verteilte XML-Bäume (XML = Extensible Markup Language) auf bestimmte IP-Adressen verteilt werden. Die einzelnen Knoten in dem XML-Baum können mit entsprechenden Anfragen in der Form von XQueries angesprochen werden. Die bekannten Verfahren werden insbesondere zur Bereitstellung eines verteilten Content-Management-Systems verwendet und dienen nicht zum Weiterleiten von Daten in einem Routing-Verfahren.

In den Druckschriften [1], [2], [3] und [4] wird die Suche nach Pfadausdrücken in XML-Dokumenten bzw. XML-Dokument-Fragmenten innerhalb eines dezentralen Datennetzes beschrieben. Die in diesen Druckschriften offenbarten Verfahren tei len die gesuchten Pfadausdrücke nicht in eindeutige und mehrdeutige Pfadabschnitte auf.

Aufgabe der Erfindung ist es, ein Verfahren zum Weiterleiten von Daten in einem dezentralen Datennetz zu schaffen, mit dem auf der Basis der Infrastruktur des dezentralen Datennetzes effizient Daten geroutet werden können.

Diese Aufgabe wird durch die unabhängigen Patentansprüche gelöst. Weiterbildungen der Erfindung sind in den abhängigen Ansprüchen definiert.

In dem erfindungsgemäßen Verfahren wird zunächst eine eindeutige Abbildung von Pfaden einer Baumstruktur, welche jeweils eindeutig einem Baumknoten entsprechen, auf in dem dezentralen Datennetz verwaltete Ressourcen bereitgestellt. Auf der Basis dieser Struktur wird somit auf einer ersten Schicht, welche Netzknoten des dezentralen Datennetzes bildet, eine zweite Schicht in der Form einer Baumstruktur aufgesetzt. Ein effizientes Weiterleiten einer Anfrage in einer derartigen Struktur wird erfindungsgemäß wie folgt erreicht:

Eine Anfrage an einen oder mehrere Baumknoten wird zunächst durch einen Pfadausdruck spezifiziert. Der Pfadausdruck wird zum Weiterleiten der Anfrage in einen oder mehrere aufeinander folgende Pfadabschnitte aufgeteilt, wobei die Pfadabschnitte in eindeutige und mehrdeutige Pfadabschnitte unterteilt werden.

Das Weiterleiten der Anfrage zu Beginn des Pfadausdrucks oder vom Ende eines jeweiligen Pfadabschnitts (d.h. vom Baumknoten am Endes des Pfadabschnitts) zu dem Baumknoten am Ende des nächsten Pfadabschnitts (welcher der erste Pfadabschnitt bei Beginn des Pfadausdrucks ist) wird dadurch erreicht, dass
i) für einen eindeutigen nächsten Pfadabschnitt basierend auf dem beim Wurzelknoten der Baumstruktur beginnenden Gesamtpfad bis zum Baumknoten am Ende des nächsten Pfad abschnitts die diesem Gesamtpfad zugewiesene Ressource in der ersten Schicht gesucht wird;
ii) für einen mehrdeutigen nächsten Pfadabschnitt alle möglichen nächsten Pfadabschnitte gemäß dem mehrdeutigen Pfadabschnitts ermittelt werden und für jeden möglichen nächsten Pfadabschnitt basierend auf dem beim Wurzelknoten der Baumstruktur beginnenden Gesamtpfad bis zum Baumknoten am Ende des möglichen nächsten Pfadabschnitts die diesem Gesamtpfad zugewiesene Ressource in der ersten Schicht gesucht wird.

In dem erfindungsgemäßen Verfahren werden geeignete Pfadausdrücke zur Beschreibung von Anfragen definiert, welche in eindeutige und mehrdeutige Pfadabschnitte unterteilt werden können. Anstatt die einzelnen Pfadabschnitte nunmehr Knoten für Knoten zu durchlaufen, erfolgt eine Weiterleitung zu dem entsprechenden Baumknoten in der ersten Schicht des dezentralen Datennetzes, und zwar indem eine Ressource auf der Basis des entsprechenden Gesamtpfads gesucht wird.

Die Erfindung hat den großen Vorteil, dass effiziente Such-Mechanismen, welche für dezentrale Datennetze bekannt sind, bei der Weiterleitung der Daten in der Baumstruktur eingesetzt werden können. Besonders vorteilhaft ist das Verfahren hierbei dann, wenn als dezentrales Datennetz ein Peer-to-Peer-Netz eingesetzt wird, bei dem einer Ressource mit einer Hash-Funktion ein Hash-Wert zugewiesen wird und die Verwaltung der Ressourcen über eine verteilte Hash-Tabelle erfolgt, wobei jeder Netzknoten des Peer-to-Peer-Netzes für einen Wertebereich der Hash-Tabelle zuständig ist und nach Ressourcen auf der Basis der Hash-Werte gesucht wird. Durch die Verwendung von solchen Peer-to-Peer-Netzen auf der ersten Schicht macht man sich die Vorteile solcher Netze, insbesondere die Skalierbarkeit und Verlässlichkeit beim Routing der Daten, zu Nutze. Das Peer-to-Peer-Netz ist hierbei vorzugsweise ein Overlay-Netz, insbesondere basierend auf einem beliebigen bekannten Netz, wie z.B. Chord und/oder Pastry und/oder Tapestry und/oder Kademlia. Die unterhalb dieses Overlay-Netzes liegende Schicht kann eine beliebige Schicht sein, vorzugsweise wird hierbei ein IP-Netz (IP = Internet Protocol) verwendet.

Gemäß einer besonders bevorzugten Ausführungsform des erfindungsgemäßen Verfahrens wird die Ausfallsicherheit beim Weiterleiten der Daten dadurch gewährleistet, dass das dezentrale Datennetz die von den Netzknoten verwalteten Ressourcen ein oder mehrere Male repliziert, so dass beim Ausfall eines Netzknotens ein entsprechender Netzknoten, der Kopien der Ressourcen des ausgefallenen Netzknotens enthält, den ausgefallenen Netzknoten ersetzt. Diese Datenreplikation wird insbesondere in den bereits oben beschriebenen Peer-to-Peer-Netzen eingesetzt.

Das erfindungsgemäße Verfahren kann in beliebigen Bereichen der Technik eingesetzt werden. Ein besonders bevorzugtes Anwendungsszenario sind hierbei jedoch Energieversorgungsnetze. Hierbei stellt die Baumstruktur ein Steuerungsnetz für ein Energieversorgungsnetz dar, wobei die Blattknoten in der Baumstruktur Energieerzeugern zugeordnet sind, die an das Energieversorgungsnetz angeschlossen sind. Ein Vorteil der Verwendung der Erfindung im Bereich der Energieversorgung besteht darin, dass nach beliebigen Kriterien entsprechende Baumstrukturen erzeugt werden können. Beispielsweise kann durch die Baumstruktur eine nach geographischen Orten der Energieerzeuger gegliederte Struktur geschaffen werden. Ebenso ist es möglich, dass durch die Baumstruktur eine nach Energiearten der Energieerzeuger gegliederte Struktur erzeugt wird. Je nach Anwendungsfall können auf diese Weise geeignete Anfragen, welche geographische Orte bzw. Energiearten spezifizieren, über die Baumstruktur generiert werden.

In einer bevorzugten Ausführungsform des erfindungsgemäßen Verfahrens ist jedem Baumknoten eine Identität zugewiesen, welche innerhalb der Kindknoten eines Elternknotens der Baumstruktur eindeutig ist. Auf diese Weise kann besonders einfach eine Syntax für einen Pfad generiert werden, welche sicherstellt, dass der Pfad gemäß der Syntax eindeutig für einen Blattknoten ist.

In einer weiteren Ausgestaltung des erfindungsgemäßen Verfahrens sind jedem Baumknoten neben einer Identität ferner ein Knotenname und/oder ein oder mehrere Attribute zugewiesen, wobei der Knotenname und/oder die Attribute Eigenschaften des Baumknotens beschreiben, insbesondere eine geographische Region und/oder eine Energieerzeugungsart.

In besonders einfacher Weise kann ein eindeutiger Pfadabschnitt in einem Pfadausdruck durch die Anzahl an aufeinander folgenden eindeutigen Spezifikationen von Baumknoten festgelegt werden. Die eindeutige Spezifikation eines Baumknotens wird dabei insbesondere zumindest durch die jeweilige Knotenidentität des Baumknotens, vorzugsweise durch die Knotenidentität und den Knotennamen des Baumknotens, festgelegt.

Ein mehrdeutiger Pfadabschnitt wird in einer bevorzugten Ausführungsform durch eine mehrdeutige Spezifikation von Kindknoten und eines Elternknotens die Anzahl an darauffolgenden eindeutigen Spezifikationen von Baumknoten festgelegt. Ein mehrdeutiger Pfadabschnitt erreicht seine Mehrdeutigkeit somit durch Festlegung von verschiedenen Kindknoten, wobei daran anschließend wieder ein eindeutiger Pfad von Baumknoten durch eindeutige Spezifikationen festgelegt ist. Der mehrdeutige Pfadabschnitt endet hierbei dann, wenn die Reihe an darauf folgenden eindeutigen Spezifikationen unterbrochen wird.

Eine mehrdeutige Spezifikation von Kindknoten kann beispielsweise durch ein Trunkierungszeichen, wie z.B. das Zeichen "*" erreicht werden. Hierdurch werden alle Kindknoten des in dem Pfadausdruck vor der mehrdeutigen Spezifikation spezifizierten Baumknotens erfasst. Die mehrdeutige Spezifikation von Kindknoten kann jedoch auch bestimmte Typen von Kindknoten festlegen, und zwar indem die Spezifikation ferner einen Knotennamen und/oder ein oder mehrere Attribute umfasst, so dass nur nach solchen Kindknoten gesucht wird, welche diese Kriterien erfüllen.

In einer weiteren Ausführungsform des erfindungsgemäßen Verfahrens kann ein Pfadausdruck neben den oben beschriebenen eindeutigen und mehrdeutigen Pfadabschnitten ferner einen Broadcast-Pfadabschnitt umfassen, wobei bei der Verarbeitung des Broadcast-Pfadabschnitts die Anfrage Baumknoten für Baumknoten an die Baumknoten weitergeleitet wird, welche in der Baumstruktur den Baumknoten folgen, der in dem Pfadausdruck vor dem Broadcast-Pfadabschnitt spezifiziert ist, und zwar bis zu den Blattknoten der Baumstruktur oder bis zum Auftreten des nächsten eindeutigen oder mehrdeutigen Pfadausdrucks.

In einer weiteren Ausführungsform des erfindungsgemäßen Verfahrens können Lese- und/oder Schreibanfragen verarbeitet werden, wobei die Leseanfragen sog. Schedule-Anfragen sein können, welche nach einem vorgegebenen Zeitschema periodisch die Übermittlung von Informationen anweisen.

Um in einer Variante der Erfindung ein effizientes Rück-Routing der Antworten in Bezug auf die Anfragen zu ermöglichen, fügt ein jeweiliger Netzknoten, der eine Anfrage empfängt, den Pfad der Anfrage bis zum entsprechenden Baumknoten in der Baumstruktur oder einen Alternativ-Pfad zu einem dem entsprechenden Baumknoten zugeordneten Alternativ-Baumknoten sowie die Anzahl an Baumknoten, an welche die Anfrage von den jeweiligen Netzknoten gesendet wird, als Eintrag einer Liste innerhalb der weiterzuleitenden Anfrage hinzu. Diese Liste kann dann beim Zurücksenden der Antwort verwendet werden, um eine geeignete Rückroute festzulegen. Vorzugsweise wird bei der Verwendung von Alternativ-Baumknoten in der Liste darauf geachtet, dass der Alternativ-Baumknoten derart dem entsprechenden Baumknoten zugeordnet wird, dass der physikalische Ort des Alternativ-Baumkriotens in der Nähe oder innerhalb der physikalischen Region liegt, welche durch den entsprechenden Baumknoten spezifiziert ist. Dies wird dann ermöglicht, wenn räumliche Regionen, beispielsweise über Namen oder Attribute, durch die Baumknoten festgelegt werden. Durch eine derartige Wahl von Alternativ-Baumknoten wird ein Rücksenden der Antwort auf besonders kurzem physikalischen Weg durch das dezentrale Datennetz gewährleistet.

Wie bereits erwähnt, können durch die Generierung einer entsprechenden Liste Rückantworten effizient zurückgesendet werden. Hierbei wird insbesondere ermöglicht, dass ein entsprechender Knoten die Datenverbindung zu den Knoten, an_welche er die Anfrage sendet, nicht bis zum Empfang der Antwort offenhalten muss. Dies wird dadurch gewährleistet, dass die Antwort auf eine jeweilige Anfrage die bei der jeweiligen Anfrage erzeugte Liste enthält, wobei eine Antwort durch Suche in der ersten Schicht nach den Ressourcen, welche den jeweiligen Pfaden in der Liste zugewiesen sind, zurückgesendet wird. Um die Vollständigkeit der Antworten gemäß der Anfrage zu gewährleisten, wartet vorzugsweise ein Netzknoten, der eine Antwort auf eine jeweilige Anfrage empfängt, so lange, bis er Antworten von der Anzahl an Netzknoten gemäß dem entsprechenden Eintrag in der Liste erhält, wobei er diese Antworten dann zu einer Antwort zusammenfasst und an den Netzknoten gemäß dem vorhergehenden Eintrag in der Liste weiterleitet. Neben dem oben beschriebenen erfindungsgemäßen Verfahren umfasst die Erfindung ferner ein dezentrales Datennetz, welches derart ausgestaltet ist, dass die Daten in dem Datennetz mit dem oben beschriebenen erfindungsgemäßen Verfahren weitergeleitet werden können.

Ausführungsbeispiele der Erfindung werden nachfolgend anhand der beigefügten Figuren detailliert beschrieben.

Es zeigen:
- Fig. 1: eine schematische Darstellung einer dreischichtigen Netzstruktur, welche in einer Ausführungsform des erfindungsgemäßen Verfahrens verwendet wird;
- Fig. 2: eine schematische Darstellung einer in dem erfindungsgemäßen Verfahren verwendeten Steuerinfrastruktur eines Energieversorgungsnetzes;
- Fig. 3: eine beispielhafte Darstellung der Verteilung von Ressourcen in einem dezentralen Datennetz und der erfindungsgemäßen Weiterleitung einer Anfrage in dem dezentralen Datennetz; und
- Fig. 4: eine Darstellung eines Ausschnitts aus der Baumstruktur, welche die in einer Ausführungsform verwendeten Alternativ-Baumknoten beinhaltet.

Das nachfolgend beschriebene Verfahren zur Weiterleitung von Daten in einem dezentralen Datennetz wird am Beispiel der Steuerung eines Energieversorgungsnetzes beschrieben, wobei das Verfahren jedoch allgemein auch auf beliebige andere Netze anwendbar ist.

Heutzutage wird elektrische Leistung nicht nur von großen Energieerzeugern durch entsprechende Kraftwerke generiert, sondern es gibt immer mehr kleinere Erzeuger von alternativen Energien, wie z.B. Solarenergie, Windenergie, Energie aus Biomasse und dergleichen. Es besteht deshalb die Notwendigkeit, Energieversorgungsnetze, an welche sowohl große Energieerzeuger als auch kleine Energieerzeuger angeschlossen sind, mit Hilfe einer entsprechenden Netzstruktur geeignet zu steuern, um hierdurch die durch die Energieerzeuger generierte Leistung entsprechend den von den Haushalten benötigten Energiemengen in den unterschiedlichen Regionen anzupassen.

In einer solchen Steuerinfrastruktur ist es beispielsweise notwendig, die Energieerzeuger auf der Basis von Biomasse darüber in Kenntnis zu setzen, dass sie ihre Energieproduktion immer dann herabsetzen sollen, wenn genug Windenergie verfügbar ist, und dass sie ihre Energieproduktion erhöhen sollen, wenn die Menge an erzeugter Windenergie sinkt. Eine entsprechende Steuerinfrastruktur muss hochskalierbar sein, da jeder einzelne Haushalt zukünftig Energieerzeugungseinheiten oder Energieverbrauchs-Regulierungseinheiten enthalten kann.

In der nachfolgend beschriebenen Ausführungsform wird die Steuerinfrastruktur eines Energieversorgungsnetzes mit Hilfe der Peer-to-Peer-Technologie realisiert, welche selbstorganisierende Infrastrukturen ermöglicht, die eine Vielzahl von dezentralen Peers enthalten und gegenüber Ausfällen von Peers robust sind. Die Peers stellen in der hier beschriebenen Ausführungsform die Netzknoten im Sinne der Ansprüche dar. Es ist aus dem Stand der Technik eine Vielzahl von unterschiedlichen Peer-to-Peer-Netzen bekannt. Die Erfindung kann mit beliebigen solchen Netzen realisiert werden. Die Robustheit von Peer-to-Peer-Netzen gegenüber Ausfällen von Peers wird insbesondere dadurch erreicht, dass die von den Peers verwalteten Ressourcen in anderen Peers repliziert werden, wobei bei Ausfall eines Peers derjenige Peer, der Kopien der Ressourcen enthält, die Verwaltung der Ressourcen des ausgefallenen Peers übernimmt.

In der hier beschriebenen Ausführungsform werden die Ressourcen in den Peers mit einer verteilten Hash-Tabelle (auch als DHT-Tabelle bezeichnet; DHT = Distributed Hash Table) verwaltet. Über ein der Ressource zugeordnetes Schlüsselwort wird mit Hilfe einer Hash-Funktion (z.B. SHA1) ein Hash-Wert erzeugt, wobei die Gesamtheit der möglichen Hash-Werte dynamisch in Wertebereiche unterteilt ist und jeder Peer für einen bestimmten Wertebereich zuständig ist. Durch den Hash-Wert, der der entsprechenden Ressource zugeordnet ist, wird dynamisch festgelegt, welcher Peer für diese Ressource aufgrund seines Zuständigkeitsbereichs verantwortlich ist. Mit Hilfe der verteilten Hash-Tabelle wird nach Ressourcen auf einfache Weise auf der Basis der Hash-Werte mit entsprechenden Such-Algorithmen gesucht. Da diese Suche nach Ressourcen keine knotenweise Weiterleitung von Daten erfordert und somit sehr effizient ist, wird sie gemäß den nachfolgenden Ausführungsformen zur Weiterleitung von Anfragen in dem Energieversorgungsnetz eingesetzt.

In einem Energieversorgungsnetz sind zwei Arten von Unternehmen beteiligt. Zum einen wird das Energieversorgungsnetz durch ein Energieversorgungsunternehmen verwaltet, wobei in der hier beschriebenen Ausführungsform das Energieversorgungsunternehmen die Steuerinfrastruktur des Netzes auf der Basis einer Baumstruktur mit einer Vielzahl von Baumknoten verwaltet. Ferner existieren die Energieerzeuger, welche mit der Steuerinfrastruktur des Energieversorgungsunternehmens verbunden sind. Das Energieversorgungsunternehmen nutzt die Steuerinfrastruktur, um Befehle an die einzelnen Energieerzeuger zu senden und Statusinformation von den Erzeugern abzurufen. In der nachfolgend beschriebenen Ausführungsform werden den Energieerzeugern durch die Baumstruktur logisch Blattknoten der Struktur zugeordnet, wobei das Energieversorgungsunternehmen diese Blattknoten durch die generierte Baumstruktur ansprechen kann.

Die Baumstruktur des Energieversorgungsunternehmens wird unabhängig von der zugrunde liegenden Hardware bereitgestellt. Selbst wenn ein entsprechender Rechner in der zugrunde liegenden Hardware ausfällt, hinzugefügt oder entfernt wird, bleibt diese Baumstruktur enthalten. Darüber hinaus kann das Energieversorgungsunternehmen mehrere unterschiedliche Blattstrukturen parallel verwalten, wobei jede Baumstruktur eine unterschiedliche Sichtweise auf das Energieversorgungsnetz wiedergibt. Auf diese Weise kann das Energieversorgungsunternehmen die am Besten für den Anwendungsfall geeignete Baumstruktur zur Steuerung der Energieversorgung auswählen.

Ein Beispiel einer Definition einer Baumstruktur kann wie folgt lauten:

```
 <power-company id="...">
      <energy-type id="weather-dependent">
           <alternative-energy id="wind".../>
        <alternative-energy id="solar".../>
        ...
      </energy-type>
      <energy-type id="weather-independent">
           <alternative-energy id="biomass".../>
           <alternative-energy id="water".../>
           ...
      </energy-type>
 </power-company>
```

Es handelt sich hierbei um eine Ansicht, welche auf den Energietypen der im Energieversorgungsnetz eingesetzten Energieerzeuger beruht. In der ersten Zeile findet sich zunächst die Definition des Energieversorgungsunternehmens (englisch: "power-company") durch eine entsprechende Identität id. Anschließend werden Spezifikationen von Baumknoten festgelegt, wobei die Spezifikationen nach Energieart (englisch: "energy-type") gegliedert sind. Es gibt in der Baumstruktur gemäß der obigen Darstellung nach dem Wurzelknoten zwei Kindknoten mit dem Namen "energy-type", wobei der eine Kindknoten die Identität "weather-dependent" und der andere Kindknoten die Identität "weather-independent" aufweist. An diese Kindknoten schließen sich weitere Kindknoten an, wobei für den Kindknoten "weather-dependent" alternative Energieerzeuger (spezifiziert durch den Knotennamen "alternative-energy") spezifiziert sind, welche vom Wetter abhängig sind, nämlich durch die Identitäten "wind" und "solar". Analog werden als Kindknoten zu dem Knoten mit der Identität "weather-independent" entsprechende alternative Energieerzeuger festgelegt, welche vom Wetter unabhängig sind, nämlich durch die Identitäten "biomass" und "water". Die obige Struktur enthält somit vier alternative Energieerzeuger, nämlich ein Windkraftwerk, ein Solarkraftwerk, ein auf Biomasse basierendes Kraftwerk und ein Wasserkraftwerk.

Das gleiche Energieversorgungsnetz gemäß der oben dargestellten Struktur kann auch durch nachfolgende, alternative Baumstruktur wiedergegeben werden, welche auf den geographischen Orten der einzelnen Kraftwerke basiert.

```
 <power-company id="...">
     <country id="de">
           <subdivision id="by">
                <region id="ofr">
                     <generator id="k1" type="wind".../>
                     <generator id="k2" type="biomass".../>
                     ...
               </region>
               ...
           </state>
           ...
     </country>
     ...
 </power company>
```

Analog zur zuvor wiedergegebenen, auf Energietypen basierenden Ansicht wird der Wurzelknoten wieder durch das Energieversorgungsunternehmen mit der entsprechenden Identität charakterisiert. Es folgt dann ein Kindknoten mit dem Namen "country", der als Identität Deutschland (spezifiziert durch "de") aufweist. Hieran schließt sich ein weiterer Kindknoten mit dem Namen "subdivision" an, der die Region Bayern (spezifiziert durch "by") charakterisiert. Die Region Bayern wird durch einen weiteren Kindknoten näher spezifiziert, der alle in Oberfranken betriebenen Kraftwerke (id = "ofr") festlegt. In der obigen Ansicht sind beispielhaft zwei Generatoren mit der Identität k1 bzw. k2 für die Region Oberfranken genannt, wobei diese Generatoren nochmals durch ein weiteres Typ-Attribut spezifiziert sind, welches die Energieerzeugungsart festlegt. Diese Energieerzeugungsart ist für den Knoten mit der Identität k1 Wind und für den Knoten mit der Identität k2 Biomasse.

Die im Vorangegangenen erläuterten Ansichten können je nach Anwendungsszenario unterschiedlich eingesetzt werden. Falls ein Energieversorgungsunternehmen beispielsweise eine Anfrage an alle Windkraftanlagen weiterleitet möchte, wird es die obige, auf Energietypen basierende Baumstruktur zur Weiterleitung der Anfrage wählen. Sollte jedoch das Energieversorgungsunternehmen an der momentanen Kapazität aller Energieerzeuger in einer bestimmten Region interessiert sein, wird es die obige, nach geographischen Regionen gegliederte Baumstruktur verwenden.

Die im Vorangegangenen beschriebenen Baumstrukturen werden erfindungsgemäß in geeigneter Weise auf ein Peer-to-Peer-System abgebildet, wie nachfolgend detailliert erläutert wird. Die wesentlichen Eigenschaften der sich daraus ergebenden Steuerinfrastruktur können wie folgt zusammengefasst werden:

### 1. Verlässlichkeit:

Durch die Erzeugung einer entsprechenden Baumstruktur, in der Daten weitergeleitet werden, wird die Unabhängigkeit von der dem System zugrunde liegenden Hardware gewährleistet. Aufgrund der Selbstorganisation des Peer-to-Peer-Systems kann Hardware problemlos hinzugefügt oder entfernt werden, wobei die logische Baumstruktur weiterhin erhalten bleibt.

### 2. Skalierbarkeit:

Zukünftig werden auch kleinere Haushalte Energieerzeugungseinheiten bzw. Energieverbrauchs-Regulierungseinheiten beinhalten, wobei mit letzteren der Verbrauch bei Lastspitzen reduziert wird. Mit der im Nachfolgenden beschriebenen Steuerinfrastruktur wird es möglich, dass ein Energieversorgungsunternehmen zunächst ein entsprechendes Steuernetz basierend auf einer kleinen Anzahl von Peers aufbaut, wobei die Anzahl an Peers bei wachsender Anzahl von Haushalten signifikant und problemlos erhöht werden kann. Der Netzverkehr zwischen den Peers wird dabei gleichmäßig verteilt, was durch die Verwendung einer DHT-Tabelle gewährleistet ist.

### 3. Multicasting und Aggregation:

Die Steuerinfrastruktur ist in der Lage, sog. Multicasting (d.h. die Weiterleitung von Anfragen an mehrere Peers) zu unterstützen, und es kann ferner ein sog. Aggregationsbaum geschaffen werden, mit dem periodisch Berichte von den Energieerzeugern an den Blattknoten zu dem Energieversorgungsunternehmen zurückgesendet werden.

### 4. Selbstorganisation:

Die mit der Erfindung bereitgestellte logische Baumstruktur ist unabhängig von der zugrunde liegenden physikalischen Infrastruktur. Hardware kann hinzugefügt oder entfernt werden, ohne dass die Baumstruktur angepasst werden muss.

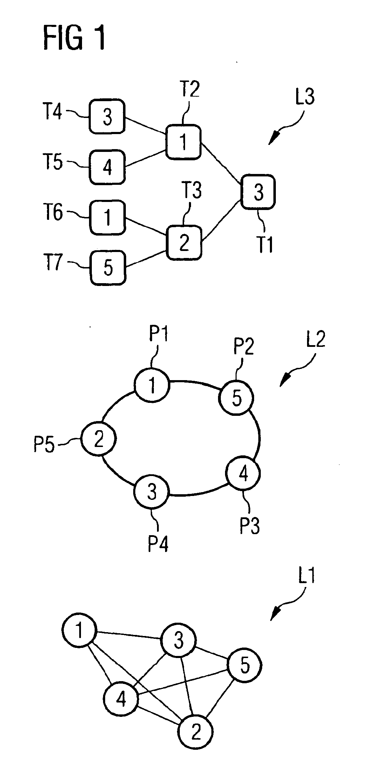

In Fig. 1 ist eine dreischichtige Netzstruktur gezeigt, welche in einer Ausführungsform des erfindungsgemäßen Verfahrens verwendet wird. Die unterste Schicht L1 stellt ein IP-Netzwerk (IP = Internet Protocol) dar, wobei die einzelnen Hosts des Netzwerks durch ein Energieversorgungsunternehmen betrieben werden. In Fig. 1 umfasst die unterste Schicht L1 Hosts 1, 2, 3, 4 und 5, welche über entsprechende Kommunikationsverbindungen (als Linien dargestellt) miteinander vernetzt sind.

Auf dieser untersten Schicht L1 ist eine Peer-to-Peer-Schicht in der Form eines Overlay-Netzes als Schicht L2 aufgesetzt, wobei diese Schicht die erste Schicht im Sinne der Ansprüche ist. In dem Beispiel der Fig. 1 wird als Peer-to-Peer-Netz eine Ringstruktur mit den einzelnen Peers P1, P2, P3, P4 und P5 verwendet, wobei für jeden Peer ferner der entsprechende Host gemäß der IP-Schicht L1 angegeben ist. Insbesondere entspricht der Peer P1 dem Host 1, der Peer P2 dem Host 5, der Peer P3 dem Host 4, der Peer P4 dem Host 3 und der Peer P5 dem Host 2. Das Peer-to-Peer-Netz der Schicht L2 stellt dabei einen Peer in einer verteilten Hash-Tabelle mit einem entsprechenden Zuständigkeitsbereich für Hash-Werte bereit. Verteilte Hash-Tabellen sind strukturierte Peer-to-Peer-Systeme, wobei jeder Peer für einen bestimmten Bereich von Schlüsselwörtern verantwortlich ist, wobei die Schlüsselwörter durch eine Hash-Funktion in entsprechende Hash-Werte der Hash-Tabelle umgewandelt werden. Wenn Ressourcen in der verteilten Hash-Tabelle gespeichert werden, wird der für die Ressource verantwortliche Peer durch die Verwendung des Schlüsselworts gefunden, welches mit der entsprechenden Ressource verknüpft ist. Die Daten von benachbarten Peers werden hierbei repliziert, so dass ein benachbarter Peer die Zuständigkeit eines ausgefallenen Peers übernehmen kann.

Oberhalb der Peer-to-Peer-Schicht L2 befindet sich in Fig. 1 eine entsprechende Baumstruktur, welche von einem Energieversorgungsunternehmen verwaltet wird. Die Baumstruktur ist in Fig. 1 als Schicht L3 bezeichnet und entspricht der zweiten Schicht im Sinne der Ansprüche. Die Baumstruktur enthält hierbei sieben Baumknoten T1 bis T7, wobei der Baumknoten T1 den Wurzelknoten, die Baumknoten T2 und T3 die Knoten einer dazwischen liegenden Hierarchieebene und die Knoten T4 bis T7 Blattknoten der Baumstruktur darstellen. Die einzelnen Baumknoten werden hierbei als Ressourcen implementiert, welche in der verteilten Hash-Tabelle der Schicht L2 gespeichert sind. Jeder Peer der Schicht L2 kann dabei mehrere Baumknoten speichern. Deshalb kann die Baumstruktur gemäß der Schicht L3 mehr Baumknoten enthalten, als Peers in der verteilten Hash-Tabelle vorhanden sind. Analog zu der Schicht L2 sind in Fig. 1 zu jedem Baumknoten die Hosts der IP-Schicht genannt, welche die jeweiligen Baumknoten in der Schicht L1 speichern.

Der Vorteil der Verwendung eines Peer-to-Peer-Systems gemäß der Schicht L2 zwischen der physikalischen Schicht L1 und der Baumstruktur L3 besteht darin, dass sich die Steuerinfrastruktur des Energieversorgungsunternehmens bei der Weiterleitung von Anfragen bzw. von Antworten auf Anfragen die Verlässlichkeit und Skalierbarkeit des Peer-to-Peer-Systems der Schicht L2 zunutze machen kann, wie nachfolgend noch näher beschrieben wird.

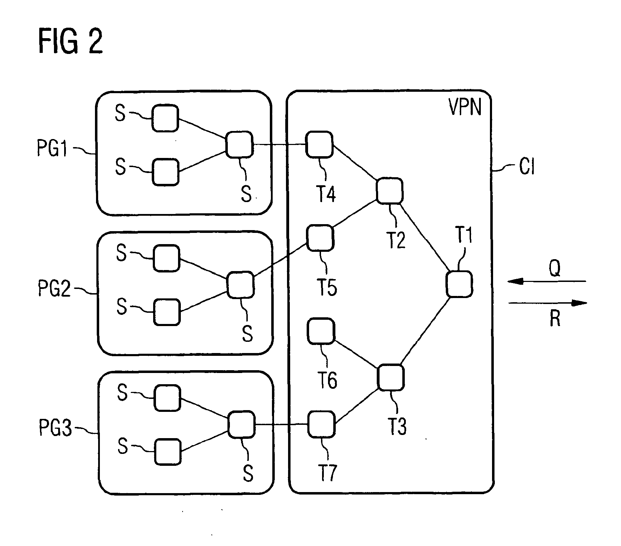

Fig. 2 zeigt in schematischer Darstellung eine spezielle Ausführungsform einer Baumstruktur, in der verdeutlicht ist, wie gemäß der Baumstruktur die einzelnen Energieerzeuger mit dem Energieversorgungsunternehmen wechselwirken. Der Teil der Baumstruktur, der die Steuerinfrastruktur des Energieversorgungsunternehmens bildet, ist hierbei in dem Rechteck CI (CI = Control Infrastructure) wiedergegeben und umfasst Baumknoten T1 bis T7. Darüber hinaus enthält die Baumstruktur gemäß Fig. 2 drei weitere Bereiche PG1, PG2 und PG3, welche einzelne Server S verschiedener Energieerzeuger PG1, PG2 und PG3 zusammenfassen. Die einzelnen Bereiche PG1, PG2 bzw. PG3 sind hierbei in der Baumstruktur CI jeweils einzelnen Blattknoten T4, T5 bzw. T7 zugeordnet, wobei der Bereich innerhalb der einzelnen Energieerzeuger in der Baumstruktur CI nicht sichtbar ist. Dies liegt daran, dass die Server innerhalb eines Energieerzeugers nicht zum Weiterleiten/Routing von Anfragen hin zu anderen Energieerzeugern genutzt werden und deshalb in der Baumstruktur nicht aufgelöst werden müssen.

Das Peer-to-Peer-Netz gemäß der verteilten Hash-Tabelle wird durch das Energieversorgungsunternehmen selbst verwaltet. Somit können alle Peers gemeinsam in einem vertrauenswürdigen VPN-Netz verwaltet werden (VPN = Virtual Private Network). Auf dieses Netz kann von außen nicht zugegriffen werden. Es wird hierbei angenommen, dass alle Peers in der verteilten Hash-Tabelle vertrauenswürdige Netzknoten sind, wodurch die Gefahr von Angriffen auf der Protokollschicht der verteilten Hash-Tabelle vermindert wird. Insbesondere kann ein Angreifer keine gefälschten Routing-Nachrichten aussenden oder unechte Peers simulieren, so lange er nicht den privaten Schlüssel des Energieversorgungsunternehmens zum Zugang zum VPN-Netz weiß.

Das Energieversorgungsunternehmen fungiert in dem Szenario der Fig. 2 als sog. Client, der Anfragen an die Baumstruktur richten kann und entsprechende Antworten auf die Anfragen empfangen kann. Solche Anfragen sind in Fig. 2 als Q und die entsprechenden Antworten als R bezeichnet. In der hier beschriebenen Ausführungsform werden die Anfragen Q durch das Energieversorgungsunternehmen signiert, und die Peers in dem Peer-to-Peer-Netz können die Signatur unter Verwendung des in dem VPN-Netz eingesetzten öffentlichen Schlüssels des Energieversorgungsunternehmens verifizieren. Dadurch, dass nichtsignierte Nachrichten in der Baumstruktur nicht weitergeleitet werden, wird die Sicherheit weiter verbessert.

Durch die gemäß der Erfindung verwendete Baumstruktur wird ein Routing von Daten innerhalb dieser Baumstruktur gewährleistet, wobei die Baumstruktur eine virtuelle Struktur ist, welche physikalisch unter den von dem Energieversorgungsunternehmen betriebenen Peers und den Servern der Energieerzeuger verteilt ist. Das in der hier beschriebenen Ausführungsform verwendete Routing benötigt die Information, über welchen Teil des Baums auf das Peer-to-Peer-Netz zugegriffen werden kann und welcher Teil bei den Servern der einzelnen Energieerzeuger liegt. Die Trennung zwischen Baumknoten im Bereich der einzelnen Energieerzeuger und Baumknoten, welche von dem Energieversorgungsunternehmen verwaltet werden, wird durch sog. Namensbäume erreicht. Der Teil der Baumstruktur, der auf den Peers des Energieversorgungsunternehmens liegt, wird unter dem Namensraum des Energieversorgungsunternehmens zusammengefasst, wohingegen die Unterbäume mit den Servern S innerhalb der einzelnen Energieerzeuger PG1, PG2 und PG3 unter den Namensräumen des Energieerzeugers zusammengefasst werden.

In der hier beschriebenen Ausführungsform werden die Baumknoten der einzelnen Energieerzeuger nicht auf das Peer-to-Peer-Netz abgebildet, weil die einzelnen Energieerzeuger ihre eigenen Datenstrukturen unter ihrem Namensraum definieren können. Somit wird in der Baumstruktur ein jeweiliger Energieerzeuger PG1, PG2 bzw. PG3 nicht aufgelöst, sondern nur durch einen entsprechenden Blattknoten T4, T5 bzw. T7 der Steuerinfrastruktur CI repräsentiert, wobei über diese Blattknoten der Zugang zu den Energieerzeugern stattfindet. Da die einzelnen Server S der Energieerzeuger nicht von der Verlässlichkeit und Skalierbarkeit des Peer-to-Peer-Netzes profitieren, sollte die proprietäre Datenstruktur der Energieerzeuger so klein wie möglich gehalten werden, und alle Datenstrukturen, welche von mehr als einem Energieerzeuger verwendet werden, sollten im Namensraum des Energieversorgungsunternehmens definiert werden.

Im Folgenden wird erläutert, wie Pfade in der gemäß der Erfindung verwendeten Baumstruktur ausgedrückt werden und entsprechende Anfragen (englisch: Queries) in der Baumstruktur formuliert werden können. Zwecks einfacherer Darstellbarkeit werden die oben erläuterten Namensraum-Präfixe zur Unterscheidung zwischen Energieversorgungsunternehmen und Energieerzeugern weggelassen. Im Folgenden wird immer nur der Namensraum der verteilten Hash-Tabelle des Energieversorgungsunternehmens betrachtet.

Die nachfolgend gewählte Syntax für Pfade und Anfrageausdrücke lehnt sich an die hinlänglich aus dem Stand der Technik bekannte XPath-Spezifikation an. Die Baumknoten in der Baumstruktur sind hierbei als Ressourcen in einer verteilten Hash-Tabelle hinterlegt. Jede Ressource ist dabei mit einem eindeutigen Schlüssel verknüpft, wobei der Schlüssel durch eine Spezifikation des in der Baumstruktur eindeutigen Pfades zu dem entsprechenden Baumknoten festgelegt ist. Dieser Pfad wird mit einer Hash-Funktion auf einen entsprechenden Hash-Wert abgebildet, für den dann ein bestimmter Peer zuständig ist. Es existiert somit eine eindeutige Zuweisung einer von einem Peer verwalteten Ressource zu dem eindeutigen Pfad eines Baumknotens. Als Pfadausdruck zur Spezifikation eines Baumknotens wird eine Notation verwendet, bei der jeder Knoten innerhalb des Pfads hin zum angesprochenen Baumknoten mit einem Knotennamen und einer entsprechenden Identität bezeichnet ist. Ein Pfadausdruck lautet beispielsweise wie folgt:
/nodel[id ='id1']/node2[id='id2']/...

Bei diesem Beispiel beginnt der Pfad an einem Knoten mit dem Namen node1 und der Identität id1 und setzt sich dann zu einem Kindknoten mit dem Namen node2 und der Identität id2 fort. Der Pfad führt dann noch zu weiteren Knoten, welche in dem Beispiel nicht weiter spezifiziert sind. Der letzte Knoten in dem Ausdruck ist dann der Baumknoten, der mit diesem Pfad spezifiziert wird. Aufgrund der Baumstruktur besteht immer eine eindeutige Zuordnung zwischen einem Baumknoten und dem Pfad hin zu dem Baumknoten.

Wie bereits erwähnt, werden die soeben beschriebenen Pfadausdrücke als Schlüsselwörter zur Erzeugung der entsprechenden Hash-Werte in der verteilte Hash-Tabelle verwendet, wobei über den Hash-Wert wiederum der Peer festgelegt ist, auf dem der entsprechende Baumknoten als Ressource hinterlegt ist.

Um nunmehr Anfragen in der Baumstruktur zu formulieren, werden Anfrageausdrücke verwendet, welche im Gegensatz zu den Pfadausdrücken nicht unbedingt eindeutig sein müssen. Es ist somit möglich, dass es verschiedene Arten gibt, die gleichen Ressourcen in der Baumstruktur anzusprechen.

In der hier beschriebenen Ausführungsform existieren drei verschiedene Arten von Anfrageausdrücken, die nachfolgend erläutert-werden:

### a) Singlecasts

Singlecasts weisen die Formen /node[id='...'] auf. Sie können hierbei eine Vielzahl von solchen Ausdrücken hintereinander beinhalten. Singlecasts spezifizieren einen eindeutigen Pfadabschnitt innerhalb einer Anfrage. Dies wird dadurch ermöglicht, dass die Identitäten id der Kindknoten eines gemeinsamen Elternknotens immer eindeutig ist. Nichtsdestotrotz können sich die Identitäten von Knoten mit unterschiedlichen Elternknoten bzw. in unterschiedlichen Hierarchieebenen des Baums wiederholen.

### b) Multicasts

Multicasts werden dazu verwendet, um mehrere Kindknoten ausgehend von einem Elternknoten zu adressieren. Es werden hierbei drei Typen von Multicasts unterschieden. Der erste Typ ist ähnlich zu einem Singlecast, verwendet jedoch ein anderes Attribut als die Identität id. Ein Beispiel eines solchen Multicasts ist /node[type='...']. Es wird somit in einem derartigen Multicast ein entsprechendes Attribut spezifiziert, wobei das Attribut im Gegensatz zur Identität für die Kindknoten nicht eindeutig ist. In dem soeben genannten Beispiel wird das Type-Attribut durch den Multicast spezifiziert. Beim zweiten Typ eines Multicasts werden jegliche Attribute weggelassen, und der Multicast wird nur durch den Namen des Baumknotens spezifiziert, d.h. der Multicast lautet /node. Auf diese Weise werden alle Kindknoten angesprochen, welche den Namen node aufweisen. Der dritte Typ Multicast ist das Trunkierungszeichen /*, welches verwendet werden kann, um alle Kinder eines Elternknotens unabhängig von ihrem Namen anzusprechen.

### c) Broadcasts

Broadcasts werden in der hier beschriebenen Ausführungsform durch das Zeichen // spezifiziert, und sie werden zum Übertragen/Broadcasten der Anfrage an den gesamten Unterbaum verwendet, der in der Anfrage vor dem Broadcast-Zeichen // spezifiziert ist.

Ein Beispiel eines Endes einer Anfrage, welche die obigen Elemente Singlecast, Multicast und Broadcast verwendet, lautet wie folgt:

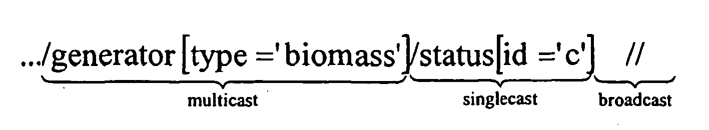

Gemäß dem Multicast-Ausdruck wird an der entsprechenden Stelle in der Baumstruktur nach allen Baumknoten gesucht, welche Generatoren sind, welche Energie auf der Basis von Biomasse erzeugen. Für diese Generatoren wird dann jeweils ein entsprechender Status durch den Singlecast /status[id='c'] abgefragt. In dem hier beschriebenen Beispiel hat der Knoten status[id='c'] die Kapazitätsdaten_als seine Kindknoten. Die Kapazitätsdaten von allen Biomasse-Generatoren in einer bestimmten Region werden dann durch den nachfolgenden Broadcast // in der obigen Abfrage abgefragt.

In der hier beschriebenen Ausführungsform der Erfindung können die einzelnen, oben dargelegten Abfrageausdrücke ferner noch nach drei unterschiedlichen Abfragetypen unterschieden werden, nämlich den Abfragetypen Read, Write und Schedule. Welcher Abfragetyp vorliegt, kann durch eine entsprechende Variable bzw. ein entsprechendes Flag in der Abfrage spezifiziert werden.

Write-Anfragen (auch als Schreib-Anfragen bezeichnet) können dazu verwendet werden, Steuernachrichten an die Energieerzeuger zu senden. Beispielsweise kann ein Energieversorgungsunternehmen eine Write-Anfrage absenden, um allen Energieerzeugern, die auf der Basis von Biomasse Energie generieren, mitzuteilen, dass sie ihre Energieausgabe erhöhen sollen. Die Antwortnachricht auf Write-Anfragen enthält die Daten der entsprechenden Energieerzeuger nach der entsprechenden Aktualisierung ihres Betriebs, d.h. nach Erhöhung der Energieausgabe. Das Energieversorgungsunternehmen erkennt nicht erfolgreiche Aktualisierungen, indem sie die Daten in der Antwortnachricht mit den erwarteten Werten vergleicht.

Read-Anfragen (auch als Lese-Anfragen bezeichnet) werden verwendet, um Daten von einem oder mehreren Energieerzeugern auszulesen. Read-Anfragen werden als Spezialfall von Write-Anfragen implementiert, wobei der zu schreibende Wert auf Null gesetzt wird. Auf diese Weise muss die erfindungsgemäße Routing-Infrastruktur nicht zwischen Read- und Write-Anfragen unterscheiden.

Schedule-Anfragen werden zur periodischen Abfrage von Berichten verwendet. Falls ein Energieversorgungsunternehmen beispielsweise in regelmäßigen Abständen den momentanen Kapazitätsstatus bestimmter Energieerzeuger ermitteln möchte, wird eine Schedule-Anfrage an die entsprechenden Energieerzeuger gesendet, wobei gemäß dieser Anfrage die Energieerzeuger angewiesen werden, ihre Kapazität in festgelegten Abständen an das Energieversorgungsunternehmen zu melden. Die Steuerinfrastruktur behandelt die Schedule-Anfragen in der hier beschriebenen Ausführungsform in gleicher Weise wie die Read-Anfragen, außer dass keine einzelne Antwortnachricht gesendet wird, sondern periodisch Antworten wiederholt ausgesendet werden.

Nachfolgend wird beschrieben, wie die oben erläuterten Anfragen erfindungsgemäß weitergeleitet werden. Im Gegensatz zu herkömmlichen Routing-Verfahren, welche den Pfad beginnend mit dem Wurzelknoten Knoten für Knoten durchlaufen, wird in der Erfindung die zugrunde liegende dezentrale Peer-to-Peer-Infrastruktur zum Routing verwendet, wobei gemäß dieser Infrastruktur mit Hilfe der Pfadausdrücke und den entsprechenden Hash-Werten direkt zu jeder Position in der Baumstruktur gesprungen werden kann, ohne die Knoten einzeln zu durchlaufen. Dieses effiziente Routing wird durch die Bildung von Pfadabschnitten in der Form von sog. "Chunks" in den Pfadausdrücken der Anfragen erreicht.

Beim Routing wird der Pfadausdruck zunächst in einen ersten Teil und einen zweiten Teil aufgeteilt, wobei der erste Teil unter den Namensraum des Energieversorgungsunternehmens fällt und der zweite Teil die Daten der einzelnen Energieerzeuger adressiert. Hier und im Folgenden wird das Routing am Beispiel des ersten Teils des Pfadausdrucks beschrieben. Die Wechselwirkung der Blattknoten des Energieversorgungsunternehmens mit den Servern der Energieerzeuger ist für den hier beschriebenen Routing-Algorithmus nicht sichtbar.

Wie oben erwähnt, wird der Pfadausdruck in sog. Chunks zerlegt. Der erste Chunk fängt am Anfang des Pfadausdrucks mit dem entsprechenden Wurzelknoten an und erstreckt sich über die Anzahl an aufeinander folgenden Singlecasts. Das heißt, der Chunk endet an dem Singlecast, an den sich unmittelbar ein Multicast oder ein Broadcast anschließt.-Dieser Chunk entspricht somit einem eindeutigen Pfadausdruck im Sinne der Ansprüche. Falls die Anfrage keine Broadcasts oder Multicasts enthält, besteht die Anfrage aus einem einzelnen Chunk in der Form eines eindeutigen Pfadabschnitts. Mit diesem einzelnen Chunk kann dann umgehend der entsprechende Hash-Wert des Pfadausdrucks in der verteilten Hash-Tabelle adressiert werden und direkt auf den entsprechenden Knoten gesprungen werden. Neben dem Chunk in der Form von aufeinander folgenden Singlecasts existieren in der hier beschriebenen Ausführungsform der Chunk eines einzelnen Multicasts in Kombination mit darauffolgendem Singlecast und der Chunk eines einzelnen Broadcasts. Der nachfolgende Ausdruck zeigt ein Beispiel, das alle drei Arten von Chunks enthält, wobei die Chunks mit den Nummern 1, 2 und 3 bezeichnet sind.

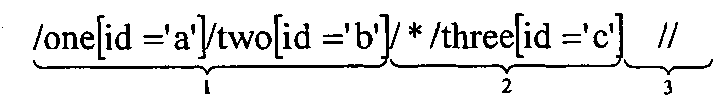

Der erste Chunk bestimmt den Baumknoten, zu dem als erstes mit Hilfe der verteilten Hash-Tabelle gesprungen wird. Dies ist in dem obigen Ausdruck der Baumknoten two[id='b']. Falls der Anfrageausdruck mit einem Broadcast oder Multicast beginnt, wäre dieser erste Knoten der Wurzelknoten der Baumstruktur. In dem obigen Beispiel muss jedoch der Wurzelknoten (bezeichnet als one[id='a']) nicht angesprochen werden. An den Chunk 1 schließt sich der Chunk 2 an, der einen mehrdeutigen Pfadausdruck im Sinne der Ansprüche darstellt und eine Kombination aus einem einzelnen Multicast und der Menge an darauf folgenden Singlecasts ist, wobei im obigen Beispiel nur ein einzelner Singlecast folgt. Der dritte Chunk 3 ist in dem obigen Beispiel ein Broadcast. Dabei können unter dem Chunk 3 jedoch alle Arten von Chunks zusammengefasst werden, welche nicht zur Gruppe der aufeinander folgenden Singlecasts gemäß Chunk 1 bzw. zur Gruppe der Kombination aus Multicast und aufeinanderfolgenden Singlecasts gehören. Ein Beispiel für diese Chunk-Kategorie wäre beispielsweise auch ein Multicast-Audruck /*, an den sich ein Chunk in der Form des obigen Chunks 2 anschließt. -

Je nach dem, welche Arten von Chunks vorliegen, werden diese unterschiedlich verarbeitet, wie nachfolgend anhand des obigen Beispiels beschrieben wird:

### Verarbeitung von Chunk 1:

Der obige Chunk 1 besteht aus zwei aufeinander folgenden Singlecasts. Er stellt einen eindeutigen Pfadausdruck dar, der gemäß der verteilten Hash-Tabelle direkt adressiert werden kann, ohne dass Knoten für Knoten durch die Baumstruktur geroutet werden muss.

### Verarbeitung von Chunk 2:

Der Chunk 2 setzt sich aus einem Multicast gefolgt von einem einzelnen Singlecast zusammen. Das Routing erfolgt nunmehr derart, dass für jeden Kindknoten dessen Pfad mit dem nachfolgenden Singlecast verknüpft wird, d.h. jeder mögliche Pfad zum Knoten three[id='c'] wird bestimmt. Für all diese Pfadausdrücke wird dann ein Routing gemäß der verteilten Hash-Tabelle vorgenommen. Einige der Pfadausdrücke existieren gegebenenfalls nicht und werden dann ignoriert. Für die anderen Pfadausdrücke wird somit die Anfrage zu den entsprechenden verantwortlichen Peers weitergeleitet. Es ist hierbei zu berücksichtigen, dass zur Realisierung des Routings auf der Basis des Chunks 2 jeder Knoten seine Kinder kennt. Darüber hinaus ist zu berücksichtigen, dass die Identität eines Kindknotens nur innerhalb der Kindknoten mit gemeinsamen Elternknoten eindeutig ist.

### Verarbeitung von Chunk 3:

Der Chunk 3 ist in dem obigen Beispiel ein Broadcast //. Gegebenenfalls könnte er auch ein einzelner Mulitcast /* sein, sofern auf den Multicast ein Chunk 2 oder ein Chunk 3 folgt. Für diese Art von Chunk wird das Routing Knoten für Knoten vorgenommen, d.h. der entsprechende Peer in dem Peer-to-Peer-Netz spricht alle Kindknoten an und leitet die Anfrage an alle Peers weiter, welche die Kindknoten verwalten. Anschließend werden ausgehend von den gefundenen Kindknoten wiederum die nächsten Kindknoten gesucht und die Anfrage an diese Kindknoten weitergeleitet.

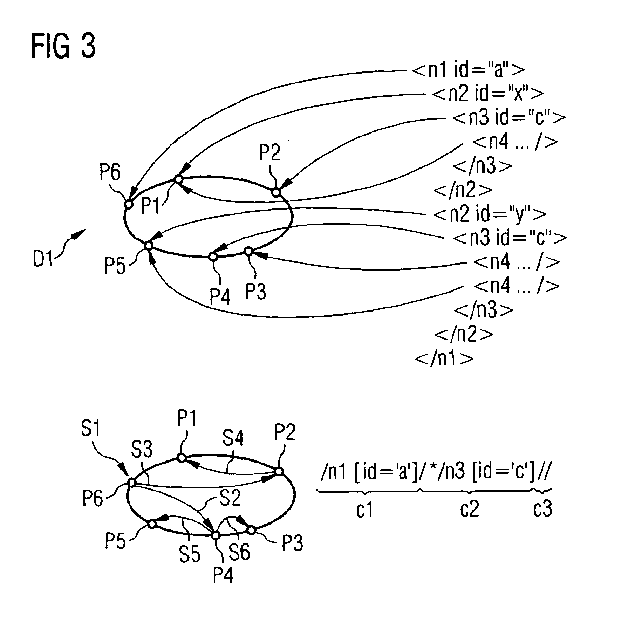

Das oben beschriebene Routing-Verfahren verarbeitet Singlecasts rekursiv, wohingegen Broadcasts und Multicasts parallel verarbeitet werden. In Fig. 3 wird das Routing nochmals anhand eines Beispiels verdeutlicht.

In der oberen Darstellung D1 in Fig. 3 ist zunächst beispielhaft eine Verteilung von Baumknoten mit Knotennamen n1, n2, n3 und n4 sowie entsprechenden (nur teilweise) angegebenen Identitäten a, x, y und c gezeigt. Es wird hierbei eine Baumstruktur geschaffen, welche mit einem Wurzelknoten mit dem Namen n1 auf Peer P6 beginnt, an den sich zwei Kindknoten mit den Namen n2 auf den Peers P1 bzw. P5 anschließen. Für den Kindknoten auf dem Peer P1 existiert dann ein weiterer Kindknoten mit dem Namen n3 auf dem Peer P2, und dieser weitere Kindknoten hat wiederum einen Kindknoten mit dem Namen n4 auf dem Peer P1. Der Wurzelknoten auf dem Peer P6 hat einen weiteren Kindknoten mit dem Namen n2 auf dem Peer P5, und dieser Kindknoten hat wiederum einen weiteren Kindknoten mit dem Namen n3 auf dem Peer P4. An diesen Kindknoten schließen sich wiederum zwei weitere Kindknoten mit dem Namen n4 auf den Peers P3 und P5 an.

Im unteren Teil D2 der Fig. 3 ist der Ablauf einer Anfrage verdeutlicht, welche sich aus den Chunks c1, c2 und c3 zusammensetzt. Der erste Chunk c1 besteht aus einem einzelnen Singlecast, mit dem der Knoten n1[id='a'] angesprochen wird. Mit der verteilten Hash-Tabelle wird somit gemäß dem Schritt S1 zunächst zu dem Peer P6 gesprungen. Es folgt anschließend ein Chunk c2 als Kombination eines Multicasts und eines Singlecasts. Es werden dann alle möglichen Pfade bestimmt, welche gemäß diesem mehrdeutigen Chunk c2 möglich sind. Da der Knoten n1[id='a'] gemäß dem Diagramm D1 zwei Kindknoten hat, nämlich <n2 id='x'> und <n2 id='y'>, ergeben sich als mögliche Pfade die jeweiligen Pfade über die gerade genannten Kindknoten. Dabei wird mit dem einen Pfad der Knoten <n3 id='c'> im Peer P2 und mit dem anderen Pfad der Knoten <n3 id='c'> in dem Peer P4 adressiert. Gemäß der verteilten Hash-Tabelle kann durch die Pfadausdrücke direkt zu den entsprechenden Peers geroutet werden, wie durch die Schritte S2 und S3 in Fig. 3 angedeutet ist.

An den Chunk c2 schließt sich der Chunk c3 in der Form eines Broadcasts an. Somit wird ausgehend vom Peer P4 bzw. P2 an alle gemäß der Baumstruktur nachfolgenden Knoten weiter geroutet, wie in Fig. 3 durch die Schritte S4, S5 bzw. S6 angedeutet ist, welche zu den entsprechenden Kindknoten führen, die auf den Peers P1, P5 bzw. P3 gespeichert sind.

Im Folgenden wird erläutert, wie die an entsprechende Baumknoten geleiteten Anfragen in geeigneter Weise zurückgeroutet werden. Erfindungsgemäß ist es hierbei nicht notwendig, dass die Peers, welche beim Weiterleiten einer jeweiligen Anfrage beteiligt waren, ihre Verbindungen so lange offen halten, bis eine Antwort empfangen wird. Um dies zu erreichen, enthält jede Nachricht beim Routen alle Informationen, welche zur Verarbeitung der Nachricht benötigt werden. Insbesondere wird eine sog. Back-Route-List zusammen mit jeder Routing-Nachricht versendet. Diese Liste wird dadurch erzeugt, dass jeder Peer, der eine Anfrage empfängt, folgendes zu der Liste hinzufügt: Den Pfadausdruck bis zu dem angesprochenen Baumknoten auf dem jeweiligen Peer und die Anzahl an Peers, welche als nächste Hops im Falle eines Broadcast- bzw. Multicast-Ausdrucks angesprochen werden.

Die obige Back-Route-Liste wird beim Zurücksenden einer Antwort auf eine Anfrage in der Antwort-Nachricht zurück übertragen. Mit Hilfe dieser Back-Route-Liste kann dann jeder Peer, der eine Antwort-Nachricht empfängt, den Pfad bis zum nächsten Hop aus der Liste entnehmen und dorthin die Antwort weiterleiten. Zusätzlich weiß ein Peer, der eine Antwort empfängt, wie viele Peers er bei der entsprechenden Anfrage angesprochen hat, da diese Anzahl in der Back-Route-Liste enthalten ist. Wenn nunmehr ein Peer eine Antwort-Nachricht empfängt, wartet dieser Peer so lange, bis er Antworten von der entsprechenden Anzahl an Peers erhalten hat, an denen er auch die Anfrage ausgesendet hat. Anschließend wird als aggregiertes Ergebnis die Menge aller Antworten an den nächsten Hop gemäß dem vorhergehenden Eintrag in der Back-Route-Liste weitergeleitet. Gegebenenfalls kann ein Timeout verwendet werden, um zu vermeiden, dass der Ausfall eines einzelnen Peers das Gesamtergebnis blockiert. Falls ein Timeout auftritt, wird ein Timeout-Flag gesetzt, welches anzeigt, dass das Ergebnis nicht vollständig ist, und der Pfadausdruck des Baumknotens, von dem die Antwort fehlt, wird in der weitergeleiteten Antwort-Nachricht hinzugefügt, um damit anzuzeigen, welcher Teil des Ergebnisses fehlt. Der Peer, der für den ersten Chunk in einer Anfrage verantwortlich war, ist auch der letzte, beim Rücksenden der Antwort angesprochene Peer. Dieser Peer aggregiert schließlich die Gesamtantworten des relevanten angesprochenen Unterbaums und gibt das Ergebnis an das Energieversorgungsunternehmen zurück.

Gemäß der oben beschriebenen Back-Route-Liste kann jeder Peer jede Antwort-Nachricht verarbeiten, ohne dass er Wissen über die ursprüngliche Route der Anfrage benötigt. Hierdurch wird in einer speziellen Ausführungsform der Erfindung auch die Möglichkeit der Optimierung von Routing-Distanzen geschaffen. Dies kann dadurch erreicht werden, dass ein Peer für jeden Baumknoten, für den er verantwortlich ist, ferner einen Alternativ-Knoten in der Form eines Schatten-Knotens in der verteilten Hash-Tabelle veröffentlicht. Der Schatten-Knoten wird hierbei derart gewählt, dass der physikalische Ort, an dem der Schatten-Knoten gespeichert ist, in der Nähe der Region liegt, welche durch den Baumknoten repräsentiert wird, für den der entsprechende Schatten-Knoten erzeugt wurde.

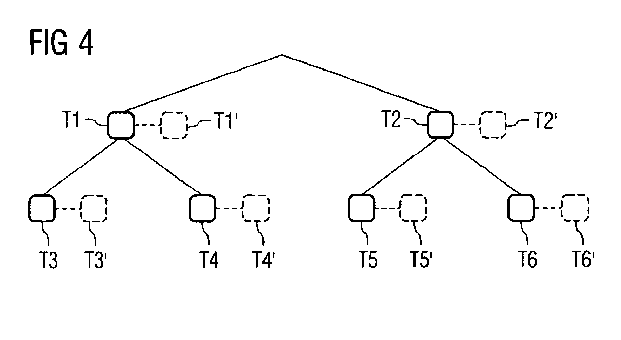

Fig. 4 zeigt beispielhaft die Generierung von Schatten-Knoten in einer erfindungsgemäßen Baumstruktur. Man erkennt, dass in der Baumstruktur der Fig. 4 für jeden Baumknoten T1, T2, T3, T₄ und T5 ein jeweiliger Schatten-Knoten T1', T2', T3', T4', T5' und T6' hinterlegt ist, wobei die Erzeugung der Schatten-Knoten durch ein Publizieren einer entsprechenden Ressource in einem Peer erreicht wird, der in einer Region liegt, welche durch den jeweiligen Blattknoten spezifiziert ist.

In der oben beschriebenen Back-Route-Liste werden dann nicht die ursprünglichen Baumknoten beim Weiterleiten einer Anfrage hinterlegt, sondern die entsprechenden Schatten-Knoten. Hierdurch wird erreicht, dass beim Rücksenden einer Antwort auf eine Anfrage eine Route derart gewählt wird, dass physikalisch kurze Wege zurück zum ursprünglichen Peer genommen werden, weil die Schatten-Knoten auf Peers verteilt werden, welche in der physikalischen Region liegen, welche durch den entsprechenden Blattknoten spezifiziert ist. Die Verwendung von Schatten-Knoten ist insbesondere bei den oben beschriebenen Schedule-Anfragen hilfreich, bei denen eine einzelne Anfrage in periodischen Abständen wiederholt entsprechende Antworten erzeugt.

### Literaturverzeichnis

[1] P. Felber, K.W. Ross, E.W. Biersack, L. Garces-Erice, G. Urvoy-Keller: "Structured Peer-to-Peer Networks: Faster, Closer, Smarter" IEEE Data Engineering Bulletin, [Online] 2005, Seiten 1-8
[2] Gleb Skobeltsyn et al: "Efficient Processing of XPath Queries with Structured Overlay Networks" ON THE MOVE TO MEANINGFUL INTERNET SYSTEMS 2005: COOPIS, DOA, AND ODBA SE LECTURE NOTES IN COMPUTER SCIENCE; LNCS, SPRINGER, BERLIN, DE, Bd. 3761, 1. Januar 2005 (2005-01-01), Seiten 1243-1260
[3] Li Yin et al: "eDSR: A Decentralized Service Registry for e-Commerce" E-BUSINESS ENGINEERING, 2005. ICEBE 2005. IEEE INTERNATIONAL CONFERENCE ON BEIJING, CHINA 12-18 OCT. 2005, PISCATAWAY, NJ, USA, IEEE, 12. Oktober 2005 (2005-10-12), Seiten 615-619
[4] Bonifati et al: Storing and retrieving XPath fragments in structured P2P networks" DATA & KNOWLEDGE ENGINEERING, NORTHHOLLAND, Bd. 59, Nr. 2, 1. November 2006 (2006-11-01), Seiten 247-269

## Patentansprüche

1. Verfahren zum Weiterleiten von Daten in einem dezentralen Datennetz, wobei eine Vielzahl von Netzknoten (P1, P2, ..., P5) des dezentralen Datennetzes eine erste Schicht (L2) bilden und Baumknoten (T1, T2, ..., T7) einer Baumstruktur (L3) als eine zweite Schicht (L3) auf die Vielzahl von Netzknoten (P1, P2, ..., P5) der ersten Schicht (L2) abgebildet sind, wobei ein jeweiliger Baumknoten (T1, T2, ..., T7) durch einen eindeutigen Pfad in der Baumstruktur (L3) charakterisiert ist und jedem Pfad eindeutig eine von wenigstens einem Netzknoten (P1, P2, ..., P5) verwaltete Ressource in dem dezentralen Datennetz (L2) zugewiesen ist, wobei eine Anfrage (Q) an einen oder mehrere Baumknoten (T1, T2, ..., T7) durch einen Pfadausdruck spezifiziert wird,
**dadurch gekennzeichnet, dass**
- der Pfadausdruck der Anfrage (Q) in einen oder mehrere aufeinander folgende Pfadabschnitte aufgeteilt wird, wobei die Pfadabschnitte in eindeutige und mehrdeutige Pfadabschnitte unterteilt werden;
- die Anfrage (Q) zu Beginn des Pfadausdrucks oder am Ende eines jeweiligen Pfadabschnitts (c1, c2, c3) zu dem Baumknoten (T1, T2, ..., T7) am Ende des nächsten Pfadabschnitts (c1, c2, c3) derart weitergeleitet wird, dass
i) für einen eindeutigen nächsten Pfadabschnitt basierend auf dem Gesamtpfad in der Baumstruktur bis zum Baumknoten (T1, T2, ..., T7) am Ende des nächsten Pfadabschnitts die diesem Gesamtpfad zugewiesene Ressource in der ersten Schicht (L2) gesucht wird;
ii) für einen mehrdeutigen nächsten Pfadabschnitt alle möglichen nächsten Pfadabschnitte gemäß dem mehrdeutigen Pfadabschnitt ermittelt werden und für jeden möglichen nächsten Pfadabschnitt basierend auf dem Gesamtpfad in der Baumstruktur bis zum Baumknoten (T1, T2, ..., T7) am Ende des möglichen nächsten Pfadabschnitts die diesem Gesamtpfad zugewiesene Ressource in der ersten Schicht gesucht wird.

2. Verfahren nach Anspruch 1, bei dem das dezentrale Datennetz ein Peer-to-Peer-Netz ist, in dem einer Ressource mit einer Hash-Funktion ein Hash-Wert zugewiesen wird und die Verwaltung der Ressourcen über eine verteilte Hash-Tabelle erfolgt, wobei jeder Netzknoten (P1, P2, ..., P5) für einen Wertebereich der Hash-Tabelle zuständig ist und nach Ressourcen auf der Basis der Hash-Werte gesucht wird.

3. Verfahren nach Anspruch 2, bei dem das Peer-to-Peer-Netz ein Overlay-Netz umfasst, insbesondere basierend auf Chord und/oder Pastry und/oder Tapestry und/oder Kademlia.

4. Verfahren nach Anspruch 3, bei dem die unter dem Overlay-Netz liegende Schicht (L1) ein IP-Netz umfasst.

5. Verfahren nach einem der vorhergehenden Ansprüche, bei dem das dezentrale Datennetz die von den Netzknoten (P1, P2, ..., P5) verwalteten Ressourcen ein oder mehrere Male repliziert, so dass beim Ausfall eines Netzknotens (P1, P2, ..., P5) ein entsprechender Netzknoten (P1, P2, ..., P5), der Kopien der Ressourcen des ausgefallenen Netzknotens (P1, P2, ..., P5) enthält, den ausgefallenen Netzknoten ersetzt.

6. Verfahren nach einem der vorhergehenden Ansprüche, bei dem durch die Baumstruktur ein Steuerungsnetz (CI) für ein Energieversorgungsnetz erzeugt wird, wobei die Blattknoten in der Baumstruktur Energieerzeugern (PG1, PG2, PG3) zugeordnet sind, die an das Energieversorgungsnetz angeschlossen sind.

7. Verfahren nach Anspruch 6, bei dem durch die Baumstruktur eine nach geographischen Orten der Energieerzeuger (PG1, PG2, PG3) gegliederte Struktur geschaffen wird.

8. Verfahren nach Anspruch 6, bei dem durch die Baumstruktur eine nach Energiearten der Energieerzeuger (PG1, PG2, PG3) gegliederte Struktur geschaffen wird.

9. Verfahren nach einem der vorhergehenden Ansprüche, bei dem jedem Baumknoten (P1, P2, ..., P5) eine Identität zugewiesen ist, welche innerhalb der Kindknoten eines Elternknotens der Baumstruktur eindeutig ist.

10. Verfahren nach Anspruch 9, bei dem jedem Baumknoten (P1, P2, ..., P5) ferner ein Knotenname und/oder ein oder mehrere Attribute zugewiesen sind, wobei der Knotenname und/oder die Attribute Eigenschaften des Baumknotens beschreiben, insbesondere eine geographische Region und/oder eine Energieerzeugungsart.

11. Verfahren nach einem der vorhergehenden Ansprüche, bei dem ein eindeutiger Pfadabschnitt durch die Anzahl an aufeinander folgenden eindeutigen Spezifikationen von Baumknoten (T1, T2, ..., T7) festgelegt ist.

12. Verfahren nach Anspruch 11 in Kombination mit Anspruch 9 oder 10, bei dem eine eindeutige Spezifikation eines Baumknotens (T1, T2, ..., T7) zumindest durch die jeweilige Knotenidentität des Baumknotens (T1, T2, ..., T7) festgelegt ist, vorzugsweise durch die Knotenidentität und den Knotennamen des Baumknotens (T1, T2, ..., T7).

13. Verfahren nach einem der vorhergehenden Ansprüche, bei dem ein mehrdeutiger Pfadabschnitt durch eine mehrdeutige Spezifikation von Kindknoten eines Elternknotens und die Anzahl an auf die Kindknoten folgenden eindeutigen Spezifikationen von Baumknoten (T1, T2, ..., T7) festgelegt wird.

14. Verfahren nach Anspruch 13, bei dem eine mehrdeutige Spezifikation von Kindknoten ein Trunkierungszeichen umfassen kann, wodurch alle Kindknoten des in dem Pfadausdruck vor der mehrdeutigen Spezifikation spezifizierten Baumknotens (T1, T2, ..., T7) erfasst werden.

15. Verfahren nach Anspruch 13 oder 14 in Kombination mit Anspruch 10, bei dem eine mehrdeutige Spezifikation von Kindknoten einen Knotennamen und/oder ein oder mehrere Attribute umfassen kann.

16. Verfahren nach einem der vorhergehenden Ansprüche, bei dem ein Pfadausdruck ferner einen Broadcast-Pfadabschnitt umfassen kann, wobei bei der Verarbeitung des Broadcast-Pfadabschnitts die Anfrage (Q) Baumknoten für Baumknoten an Baumknoten (T1, T2, ..., T7) weitergeleitet wird, welche in der Baumstruktur dem Baumknoten (T1, T2, ..., T7) folgen, der in dem Pfadausdruck vor dem Broadcast-Pfadabschnitt spezifiziert ist, und zwar bis zu den Blattknoten der Baumstruktur oder bis zum Auftreten des nächsten eindeutigen oder mehrdeutigen Pfadabschnitts.

17. Verfahren nach einem der vorhergehenden Ansprüche, bei dem die Anfragen (Q) Lese- und/oder Schreibanfragen umfassen, wobei die Leseanfragen einmalige und/oder periodische Leseanfragen umfassen.

18. Verfahren nach einem der vorhergehenden Ansprüche, bei dem ein jeweiliger Netzknoten (P1, P2, ..., P5), der eine Anfrage (Q) empfängt, einen Eintrag einer Liste innerhalb der weiterzuleitenden Anfrage (Q) hinzufügt, wobei der Eintrag den Pfad der Anfrage (Q) bis zu dem jeweiligen Netzknoten (P1, P2, ..., P5) entsprechenden Baumknoten (T1, T2, ..., T7) in der Baumstruktur umfasst oder einen Alternativpfad zu einem dem entsprechende Baumknoten (T1, T2, ..., T7) zugeordneten Alternativ-Baumknoten (T1', T2', ..., T7') sowie die Anzahl an Baumknoten, an welche die Anfrage (Q) von den jeweiligen Netzknoten (P1, P2, ..., P5) weitergeleitet wird.

19. Verfahren nach Anspruch 18, bei dem durch die Baumknoten (T1, T2, ..., T7) jeweils eine räumliche Region spezifiziert wird, wobei der Alternativ-Baumknoten (T1, T2, ..., T7) derart dem entsprechenden Baumknoten (T1, T2, ..., T7) zugeordnet wird, dass der physikalische Ort des Alternativ-Baumknotens (T1, T2, ..., T7) in der Nähe oder innerhalb der Region liegt, welche durch den entsprechenden Baumknoten (T1, T2, ..., T7) spezifiziert ist.

20. Verfahren nach Anspruch 18 oder 19, bei dem die Antwort (R) auf eine jeweilige Anfrage (Q) die bei der jeweiligen Anfrage (Q) erzeugte Liste enthält, wobei eine Antwort (R) durch Suche in der ersten Schicht (L2) nach den Ressourcen, welche den jeweiligen Pfaden in der Liste zugewiesen sind, zurückgesendet wird.

21. Verfahren nach Anspruch 20, bei dem ein Netzknoten (P1, P2, ..., P5), der eine Antwort (R) auf die jeweilige Anfrage (Q) empfängt, so lange wartet, bis er Antworten von der Anzahl an Netknoten (P1, P2, ..., P5) gemäß dem entsprechenden Eintrag in der Liste erhält, und diese Antworten (R) zu einer Antwort zusammenfasst und an den Netzknoten gemäß dem vorhergehenden Eintrag in der Liste weiterleitet.

22. Verfahren nach einem der Ansprüche 18 bis 21, bei dem die Datenverbindung eines eine Anfrage (Q) weiterleitenden Netzknotens (P1, P2, ..., P5) zu den Netzknoten (T1, T2, ..., T7), an welche die Anfrage (Q) weitergeleitet wird, nach Weiterleiten der Anfrage (Q) beendet wird.

23. Dezentrales Datennetz, wobei eine Vielzahl von Netzknoten (P1, P2, ..., P5) des dezentralen Datennetzes eine erste Schicht (L2) bilden und Baumknoten (T1, T2, ..., T7) einer Baumstruktur (L3) als eine zweite Schicht (L3) auf die Vielzahl von Netzknoten (P1, P2, ..., P5) der ersten Schicht (L2) abgebildet sind, wobei ein jeweiliger Baumknoten (T1, T2, ..., T7) durch einen eindeutigen Pfad in der Baumstruktur (L3) charakterisiert ist und jedem Pfad eindeutig eine von wenigstens einem Netzknoten (P1, P2, ..., P5) verwaltete Ressource in dem dezentralen Datennetz (L2) zugewiesen ist, wobei das dezentrale Datennetz derart ausgestaltet ist, dass Daten mit einem Verfahren nach einem der vorhergehenden Ansprüche weitergeleitet werden.

## Claims

1. Method for forwarding data in a local data network, with a plurality of network nodes (P1, P2, ..., P5) of the local data network forming a first layer (L2) and tree nodes (T1, T2, ..., T7) of a tree structure (L3) being mapped as a second layer (L3) on the plurality of network nodes (P1, P2, ..., P5) of the first layer (L2), with a respective tree node (T1, T2, ..., T7) being **characterised by** a unique path in the tree structure (L3) and each path being uniquely allocated a resource managed by at least one network node (P1, P2, ..., P5) in the local data network (L2), with a query (Q) to one or more tree nodes (T1, T2, ..., T7) being specified by a path expression,
**characterised in that**
- the path expression of the query (Q) is divided up into one or more consecutive path sections, with the path sections being divided into unambiguous and ambiguous path sections;
- the query (Q) at the beginning of the path expression or at the end of a respective path section (c1, c2, c3) is forwarded to the tree node (T1, T2, ..., T7) at the end of the next path section (c1, c2, c3) such that
i) for an unambiguous next path section based on the complete path in the tree structure up to the tree node (T1, T2, ..., T7) at the end of the next path section, the resource allocated to this complete path is sought in the first layer (L2);
ii) for an ambiguous next path section all possible next path sections are determined in accordance with the ambiguous path section and for each possible next path section based on the complete path in the tree structure up to the tree node (T1, T2, ..., T7) at the end of the possible next path section the resource allocated to this complete path is sought in the first layer.

2. Method according to claim 1, in which the local data network is a peer-to-peer network, in which a resource is allocated a hash value with a hash function and the resources are managed using a distributed hash table, with each network node (P1, P2, ..., P5) being responsible for a range of values of the hash table and resources being searched for on the basis of the hash values.

3. Method according to claim 2, in which the peer-to-peer network comprises an overlay network, especially based on chord and/or pastry and/or tapestry and/or Kademlia.

4. Method according to claim 3, in which the layer (L1) lying under the overlay network comprises an IP network.

5. Method according to one of the preceding claims, in which the local data network replicates the resources managed by the network node (P1, P2, ..., P5) one or more times, so that on failure of a network node (P1, P2, ..., P5) a corresponding network node (P1, P2, ..., P5), which contains copies of the resources of the failed network node (P1, P2, ..., P5) replaces the failed network node.

6. Method according to one of the preceding claims, in which a control network (CI) for an energy supply network is created by the tree structure, with the leaf nodes in the tree structure being assigned energy generators (PG1, PG2, PG3), which are connected to the energy supply network.

7. Method according to claim 6, in which a structure subdivided in accordance with geographical locations of the energy generators (PG1, PG2, PG3) is created by the tree structure.

8. Method according to claim 6, in which a structure subdivided in accordance with energy types of the energy generators (PG1, PG2, PG3) is created by the tree structure.

9. Method according to one of the preceding claims, in which each tree node (P1, P2, ..., P5) is allocated an identity, which is unambiguous within the child nodes of a parent node of the tree structure.

10. Method according to claim 9, in which each tree node (P1, P2, ..., P5) is further allocated a node name and/or one or more attributes, with the node name and/or the attributes describing characteristics of the tree node, especially a geographical region and/or a type of energy generation.

11. Method according to one of the preceding claims, in which an unambiguous path section is defined by the number of consecutive unambiguous specifications of tree nodes (T1, T2, ..., T7).

12. Method according to claim 11 in combination with claim 9 or 10, in which an unambiguous specification of a tree node (T1, T2, ..., T7) is at least defined by the respective node identity of the tree node (T1, T2, ..., T7), preferably by the node identity and the node name of the tree node (T1, T2, ..., T7).

13. Method according to one of the preceding claims, in which an ambiguous path section is defined by an ambiguous specification of child nodes of a parent node and the number of unambiguous specifications of tree nodes (T1, T2, ..., T7) following the child nodes.

14. Method according to claim 13, in which an ambiguous specification of child nodes can include a wildcard character, by which all child nodes of the tree node (T1, T2, ..., T7) in the path expression specified before the ambiguous specification are included.

15. Method according to claim 13 or 14 in combination with claim 10, in which an ambiguous specification of child nodes can include a node name and/or one or more attributes.

16. Method according to one of the preceding claims, in which a path expression can further include a broadcast path section, wherein, during the processing of the broadcast path section, the query (Q) is forwarded tree node by tree node to tree nodes (T1, T2, ..., T7) which follow the tree node (T1, T2, ..., T7) in the tree structure which is specified in the path expression before the broadcast path section, and indeed up to the leaf nodes of the tree structure or up to the occurrence of the next unambiguous or ambiguous path section.

17. Method according to one of the preceding claims, in which the queries (Q) comprise read and/or write queries, with the read queries comprising one-off and/or periodic read queries.

18. Method according to one of the preceding claims, in which a respective network node (P1, P2, ..., P5), which receives a query (Q), inserts an entry of a list within the query (Q) to be forwarded, with the entry comprising the path of the query (Q) up to the tree node (T1, T2, ..., T7) corresponding to the respective network node (P1, P2, ..., P5) in the tree structure or an alternative path to an alternative tree node (T1', T2', ..., T7') assigned to the corresponding tree node (T1, T2, ..., T7) as well as the number of tree nodes, to which the query (Q) will be forwarded by the network node (P1, P2, ..., P5).

19. Method according to claim 18, in which a spatial region is specified in each case by the tree node (T1, T2, ..., T7), with the alternative tree node (T1', T2', ..., T7') being assigned to the corresponding tree node (T1, T2, ..., T7) such that the physical location of the alternative tree node (T1' T2', ..., T7') lies in the vicinity or within the region, which is specified by the corresponding tree node (T1, T2, ..., T7).

20. Method according to claim 18 or 19, in which the reply (R) to the respective query (Q) contains the list created for the respective query (Q), with a reply (R) being returned by searching in the first layer (L2) for the resources which are allocated to the respective paths in the list.

21. Method according to claim 20, in which a network node (P1, P2, ..., P5), which receives a reply (R) to the respective query (Q), waits until such time as it receives replies from the number of network nodes (P1, P2, ..., P5) according to the corresponding entry in the list, and combines these replies (R) into one reply and forwards it to the network nodes in accordance with the previous entry in the list.

22. Method according to one of claims 18 to 21, in which the data connection of a network node (P1, P2, ..., P5) forwarding a query (Q) to the network nodes (T1, T2, ..., T7) to which the query (Q) is forwarded, is ended after forwarding of the query (Q).

23. Local data network, with a plurality of network nodes (P1, P2, ..., P5) of the local data network forming a first layer (L2) and tree nodes (T1, T2, ..., T7) of a tree structure (L3) being mapped as a second layer (L3) onto the plurality of network nodes (P1, P2, ..., P5) of the first layer (L2), with a respective tree node (T1, T2, ..., T7) being **characterised by** an unambiguous path in the tree structure (L3) and each path being uniquely assigned a resource in the local data network (L2) managed by at least one network node (P1, P2, ..., P5), with the local data network being designed so that data is forwarded with a method in accordance with one of the preceding claims.

## Revendications

1. Procédé pour retransmettre des données dans un réseau de données décentralisé, une pluralité de noeuds de réseau (P1, P2, ..., P5) du réseau de données décentralisé formant une première couche (L2) et des noeuds d'arborescence (T1, T2, ..., T7) d'une arborescence (L3) étant appliqués, en tant que deuxième couche (L3), sur la pluralité de noeuds de réseau (P1, P2, ..., P5) de la première couche (L2), un noeud d'arborescence respectif (T1, T2, ..., T7) étant **caractérisé par** un chemin univoque dans l'arborescence (L3) et une ressource gérée par au moins un noeud de réseau (P1, P2, ..., P5) étant, dans le réseau de données décentralisé (L2), affectée univoquement à chaque chemin, une requête (Q) adressée à un ou plusieurs noeuds d'arborescence (T1, T2, ..., T7) étant spécifiée par une expression de chemin, **caractérisé en ce que**
- l'expression de chemin de la requête (Q) est répartie en une ou plusieurs sections de chemin successives, les sections de chemin étant subdivisés en sections de chemin univoques et plurivoques ;
- la requête (Q) est retransmise, au début de l'expression de chemin ou à la fin d'une section de chemin respective (c1, c2, c3), vers le noeud d'arborescence (T1, T2, ..., T7) à la fin de la section de chemin suivante (c1, c2, c3) de manière telle que :
i) pour une section de chemin suivante univoque est recherchée, dans la première couche (L2), sur la base du chemin total dans l'arborescence, jusqu'au noeud d'arborescence (T1, T2, ..., T7) à la fin de la section de chemin suivante, la ressource affectée à ce chemin total ;
ii) pour une section de chemin suivante plurivoque, toutes les sections de chemin suivantes possibles sont déterminées conformément à la section de chemin plurivoque et pour chaque section de chemin suivante possible est recherchée, dans la première couche, sur la base du chemin total dans l'arborescence jusqu'au noeud d'arborescence (T1, T2, ..., T7) à la fin de la section de chemin suivante possible, la ressource affectée à ce chemin total.

2. Procédé selon la revendication 1, dans lequel le réseau de données décentralisé est un réseau poste à poste dans lequel une valeur de hachage est affectée à une ressource avec une fonction de hachage et la gestion des ressources s'effectue par l'intermédiaire d'un tableau de hachage distribué, chaque noeud de réseau (P1, P2, ..., P5) étant compétent pour une plage de valeurs du tableau de hachage et des ressources étant recherchées sur la base des valeurs de hachage.

3. Procédé selon la revendication 2, dans lequel le réseau poste à poste comprend un réseau overlay basé en particulier sur Chord et/ou Pastry et/ou Tapestry et/ou Kademlia.

4. Procédé selon la revendication 3, dans lequel la couche (L1) située en dessous du réseau overlay comprend un réseau IP.

5. Procédé selon l'une des revendications précédentes, dans lequel le réseau de données décentralisé réplique une ou plusieurs fois les ressources gérées par les noeuds de réseau (P1, P2, ..., P5) de sorte que, en cas de défaillance d'un noeud de réseau (P1, P2, ..., P5), un noeud de réseau correspondant (P1, P2, ..., P5), qui contient des copies des ressources du noeud de réseau défaillant (P1, P2, ..., P5), remplace le noeud de réseau défaillant.

6. Procédé selon l'une des revendications précédentes, dans lequel un réseau de commande (CI) pour un réseau d'alimentation en énergie est créé par l'arborescence, les noeuds de feuille de l'arborescence étant associés à des producteurs d'énergie (PG1, PG2, PG3) qui sont raccordés au réseau d'alimentation en énergie.

7. Procédé selon la revendication 6, dans lequel une structure organisée selon les localisations géographiques des producteurs d'énergie (PG1, PG2, PG3) est créée par l'arborescence.

8. Procédé selon la revendication 6, dans lequel une structure organisée selon les types d'énergie des producteurs d'énergie (PG1, PG2, PG3) est créée par l'arborescence.

9. Procédé selon l'une des revendications précédentes, dans lequel est affectée, à chaque noeud d'arborescence (P1, P2, ..., P5), une identité qui est univoque parmi les noeuds enfants d'un noeud parent de l'arborescence.

10. Procédé selon la revendication 9, dans lequel sont en outre affectés, à chaque noeud d'arborescence (P1, P2, ..., P5), un nom de noeud et/ou un ou plusieurs attributs, le nom de noeud et/ou les attributs décrivant des caractéristiques du noeud d'arborescence, et plus particulièrement une région géographique et/ou un type de production d'énergie.

11. Procédé selon l'une des revendications précédentes, dans lequel une section de chemin univoque est déterminée par le nombre de spécifications univoques successives de noeuds d'arborescence (T1, T2, ..., T7).

12. Procédé selon la revendication 11 en combinaison avec la revendication 9 ou 10, dans lequel une spécification univoque d'un noeud d'arborescence (T1, T2, ..., T7) est déterminée au moins par l'identité de noeud respective du noeud d'arborescence (T1, T2, ..., T7), et de préférence par l'identité de noeud et le nom de noeud du noeud d'arborescence (T1, T2, ..., T7).

13. Procédé selon l'une des revendications précédentes, dans lequel une section de chemin plurivoque est déterminée par une spécification plurivoque de noeuds enfants d'un noeud parent et le nombre de spécifications de noeuds d'arborescence (T1, T2, ..., T7) qui sont univoques et font suite aux noeuds enfants.

14. Procédé selon la revendication 13, dans lequel une spécification plurivoque de noeuds enfants peut inclure un signe de troncature de telle sorte que tous les noeuds enfants du noeud d'arborescence (T1, T2, ..., T7) spécifiés dans l'expression de chemin avant la spécification plurivoque sont recensés.

15. Procédé selon la revendication 13 ou 14 en combinaison avec la revendication 10, dans lequel une spécification plurivoque de noeuds enfants peut inclure un nom de noeud et/ou un ou plusieurs attributs.

16. Procédé selon l'une des revendications précédentes, dans lequel une expression de chemin peut en outre inclure une section de chemin de diffusion, la requête (Q), lors du traitement de la section de chemin de diffusion, étant retransmise, noeud d'arborescence par noeud d'arborescence, à des noeuds d'arborescence (T1, T2, ..., T7 ) qui, dans l'arborescence, font suite au noeud d'arborescence (T1, T2, ..., T7) qui est spécifié dans l'expression de chemin avant la section de chemin de diffusion, et ce, jusqu'aux noeuds de feuille de l'arborescence ou jusqu'à ce que se présente la section de chemin univoque ou plurivoque suivante.

17. Procédé selon l'une des revendications précédentes, dans lequel les requêtes (Q) incluent des requêtes de lecture et/ou d'écriture, les requêtes de lecture comprenant des requêtes de lecture uniques et/ou périodiques.

18. Procédé selon l'une des revendications précédentes, dans lequel un noeud de réseau respectif (P1, P2, ..., P5) qui reçoit une requête (Q) ajoute une entrée à une liste dans la requête (Q) à retransmettre, l'entrée comprenant le chemin de la requête (Q) jusqu'au noeud d'arborescence (T1, T2, ..., T7) de l'arborescence qui correspond à des noeuds de réseau respectifs (P1, P2, ..., P5) ou un chemin alternatif vers un noeud d'arborescence alternatif (T1', T2', ..., T7') associé au noeud d'arborescence correspondant (T1, T2, ..., T7) ainsi que le nombre de noeuds d'arborescence auxquels la requête (Q) est retransmise par les noeuds de réseau respectifs (P1, P2, ..., P5).

19. Procédé selon la revendication 18, dans lequel une région dans l'espace est respectivement spécifiée par les noeuds d'arborescence (T1, T2, ..., T7), le noeud d'arborescence alternatif (T1, T2, ..., T7) étant affecté de manière telle au noeud d'arborescence correspondant (T1, T2, ..., T7) que la localisation physique du noeud d'arborescence alternatif (T1, T2, ..., T7) est à proximité de ou dans la région qui est spécifiée par le noeud d'arborescence correspondant (T1, T2, ..., T7).

20. Procédé selon la revendication 18 ou 19, dans lequel la réponse (R) à une requête respective (Q) contient la liste créée à la requête respective (Q), une réponse (R) étant retournée par la recherche, dans la première couche (L2), de ressources qui sont affectées aux chemins respectifs dans la liste.

21. Procédé selon la revendication 20, dans lequel un noeud de réseau (P1, P2, ..., P5) qui reçoit une réponse (R) à la requête respective (Q) attend jusqu'à ce qu'il reçoive des réponses du nombre de noeuds de réseau (P1, P2, ..., P5) selon l'entrée correspondante dans la liste et résume ces réponses (R) en une réponse et retransmet au noeud de réseau conformément à l'entrée précédente dans la liste.

22. Procédé selon l'une des revendications 18 à 21, dans lequel la liaison de données d'un noeud de réseau (P1, P2, ..., P5) retransmettant une requête (Q), liaison vers les noeuds de réseau (T1, T2, ..., T7) auxquels est retransmise la requête (Q), se termine après la retransmission de la requête (Q).

23. Réseau de données décentralisé, une pluralité de noeuds de réseau (P1, P2, ..., P5) du réseau de données décentralisé formant une première couche (L2) et des noeuds d'arborescence (T1, T2, ..., T7) d'une arborescence (L3) étant appliqués, en tant que deuxième couche (L3), sur la pluralité de noeuds de réseau (P1, P2, ..., P5) de la première couche (L2), un noeud d'arborescence respectif (T1, T2, ..., T7) étant **caractérisé par** un chemin univoque dans l'arborescence (L3) et une ressource gérée par au moins un noeud de réseau (P1, P2, ..., P5) étant, dans le réseau de données décentralisé (L2), affectée univoquement à chaque chemin, le réseau de données décentralisé étant réalisé de manière telle que des données sont retransmises avec un procédé selon l'une des revendications précédentes.
